# EUROPEAN PATENT APPLICATION

(11) **EP 2 793 216 A2**
(43) Date of publication of application: **22.10.2014**
(21) Application number: 14164019.3
(22) Date of filing: 09.04.2014
(51) Int. Cl.: G09G 3/34

(54) **Image processing method of display device and display device thereof**

(30) Priority: 17.04.2013 TW 102113660
(71) Applicant: BenQ Corporation, Taipei 114 (TW)
(72) Inventor: Lin, Hsin-Nan, 114 Taipei (TW)
(74) Representative: Becker Kurig Straus

(57) **Abstract**

An image processing method of a display device (100) includes providing a DC current to a backlight module (120) of the display device (100); adjusting a level of the DC current according to a brightness control signal in order to control a brightness level of the backlight module (120); and when the brightness level of the backlight module (120) is changed, adjusting color temperature and a gamma curve of the display device (100) in order to make the color temperature and the gamma curve of the display device (100) substantially identical to color temperature and a gamma curve of the display device (100) in a state of the brightness level of the backlight module (120) being at a predetermined brightness level.

## Description

### Field of the Invention

The present invention is related to an image processing method of a display device and a display device for keeping color temperature and a gamma curve of displayed images consistent according to the pre-characterizing clauses of claims 1, 6 and 11.

### Background of the Invention

Since a liquid crystal display panel cannot emit light by itself, the liquid crystal display panel must work with a backlight module as a light source. Generally, there are two kinds of methods to adjust a brightness level of the backlight module, one is DC dimming method, and the other one is AC dimming method. The DC dimming method is for adjusting a level of a DC current provided to the backlight module, in order to adjust the brightness level of the backlight module. The AC dimming method is for adjusting a pulse width of an AC power signal provided to the backlight module, in order to adjust the brightness level of the backlight module.

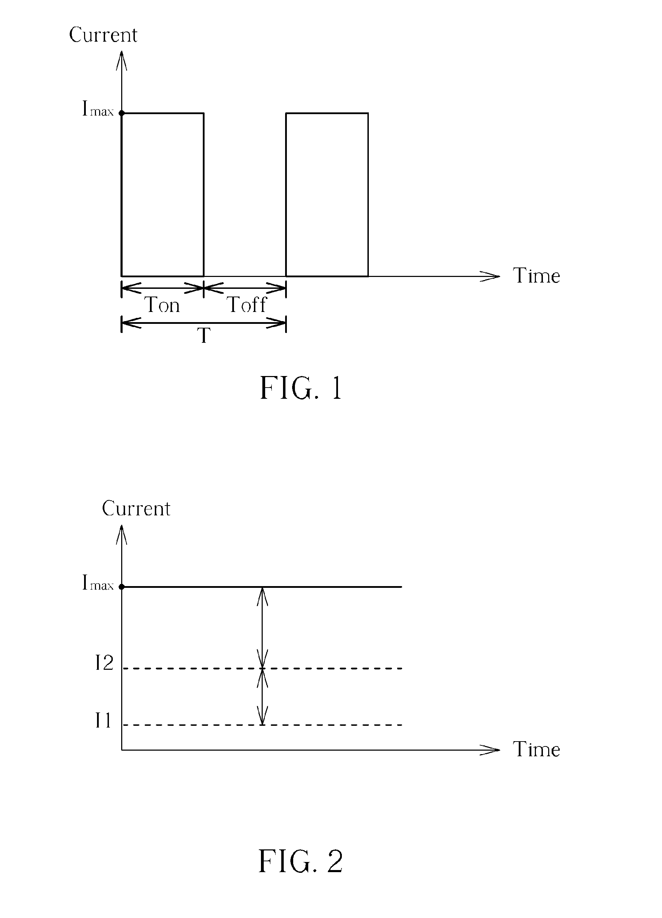

Please refer to FIG. 1. FIG. 1 is a diagram showing a waveform of an AC power signal according to the AC dimming method of the prior art. As shown in FIG. 1, the AC power signal is a discontinuous current, and a peak level of the current is a fixed value Imax. The AC dimming method of the prior art controls turn-on time Ton and turn-off time Toff of a power switch according to a duty ratio for adjusting a pulse width of the AC power signal. The duty ration is equal to a ratio of the turn-on time Ton to a full cycle time T.

The DC dimming method can solve a blink problem of the AC dimming method, however, in the prior art, when using the DC dimming method to adjust the brightness level of the backlight module, colors displayed on pixels of the liquid crystal display panel may shift, so as to change color temperature and a gamma curve of the liquid crystal display panel. Therefore, the DC dimming method of the prior art cannot keep the color temperature and the gamma curve consistent.

### Summary of the Invention

This in mind, the present invention aims at providing an image processing method of a display device and a display device for keeping color temperature and a gamma curve of displayed images consistent.

This is achieved by an image processing method and a display device according to claims 1, 6 and 11. The dependent claims pertain to corresponding further developments and improvements.

As will be seen more clearly from the detailed description following below, the claimed image processing method of a display device includes providing a DC current to a backlight module of the display device; adjusting a level of the DC current according to a brightness control signal in order to control a brightness level of the backlight module; and when the brightness level of the backlight module is changed, adjusting color temperature and a gamma curve of the display device in order to make the color temperature and the gamma curve of the display device substantially identical to color temperature and a gamma curve of the display device in a state of the brightness level of the backlight module being at a predetermined brightness level.

As will be seen more clearly from the detailed description following below, the claimed display device includes a backlight module, a DC current providing unit, and an image processing unit. The DC current providing unit is for providing a DC current to the backlight module, and adjusting a level of the DC current according to a brightness control signal in order to control a brightness level of the backlight module. The image processing unit is for adjusting color temperature and a gamma curve of the display device when the brightness level of the backlight module is changed, in order to make the color temperature and the gamma curve of the display device substantially identical to color temperature and a gamma curve of the display device in a state of the brightness level of the backlight module being at a predetermined brightness level.

As will be seen more clearly from the detailed description following below, the claimed display device includes a backlight module, a DC current providing unit, and an image processing unit. The DC current providing unit is for providing a DC current to the backlight module, and adjusting a level of the DC current according to a brightness control signal in order to control a brightness level of the backlight module. The image processing unit is coupled to the DC current providing unit, for performing gamma correction to inputted image data when the brightness control signal is a first brightness control signal, in order to let corrected image data correspond to a predetermined gamma curve. Wherein when the brightness control signal is switched from the first brightness control signal to a second brightness control signal, the image processing unit is further configured to perform gamma correction to the inputted image data, in order to let corrected image data correspond to the predetermined gamma curve.

### Brief Description of the Drawings

FIG. 1 is a diagram showing a waveform of an AC power signal according to the AC dimming method of the prior art,
FIG. 2 is a diagram showing a waveform of a DC current according to a DC dimming method,
FIG. 3 is a diagram showing a color shift situation of the DC dimming method,
FIG. 4 is a diagram showing a display device of the present invention,
FIG. 5 is a functional block diagram of the image processing unit of FIG. 4,
FIG. 6 is a diagram showing an embodiment of the back light module and the DC current providing unit of the present invention, and
FIG. 7 is a flowchart showing the image processing method of the display device of the present invention.

### Detailed Description

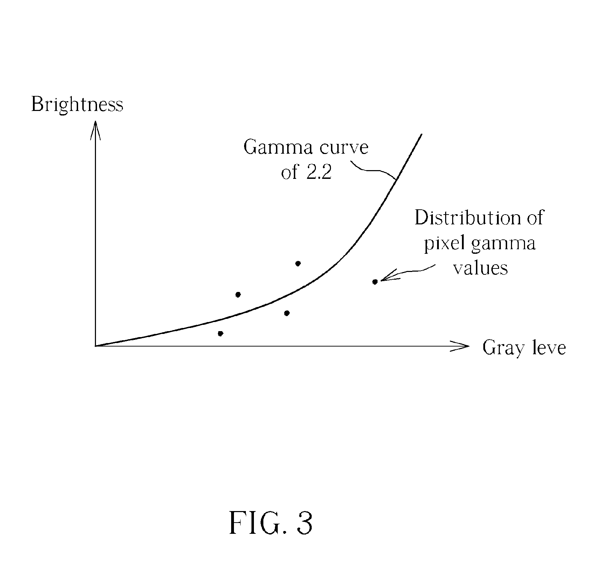

Please refer to FIG. 2 and FIG. 3 together. FIG. 2 is a diagram showing a waveform of a DC current according to a DC dimming method.

FIG. 3 is a diagram showing a color shift situation of the DC dimming method. As shown in FIG. 2, the DC dimming method controls a level of the DC current for adjusting a brightness level of a backlight module. Each level of the DC current corresponds to a specific brightness level. For example, for adjusting the brightness level of the backlight module to a brightest level, the DC dimming method controls the level of the DC current to a maximum level Imax; and for adjusting the brightness level of the backlight module to a darker level, the DC dimming method controls the level of the DC current to a lower level, such as I1 or I2. However, as shown in FIG.3, when the DC dimming method reduces the level of the DC current, colors displayed by pixels may be shifted, such that gamma values of the pixels are shifted from an original gamma curve (such as a gamma curve of 2.2). In addition, color temperature of the pixels may be changed correspondingly.

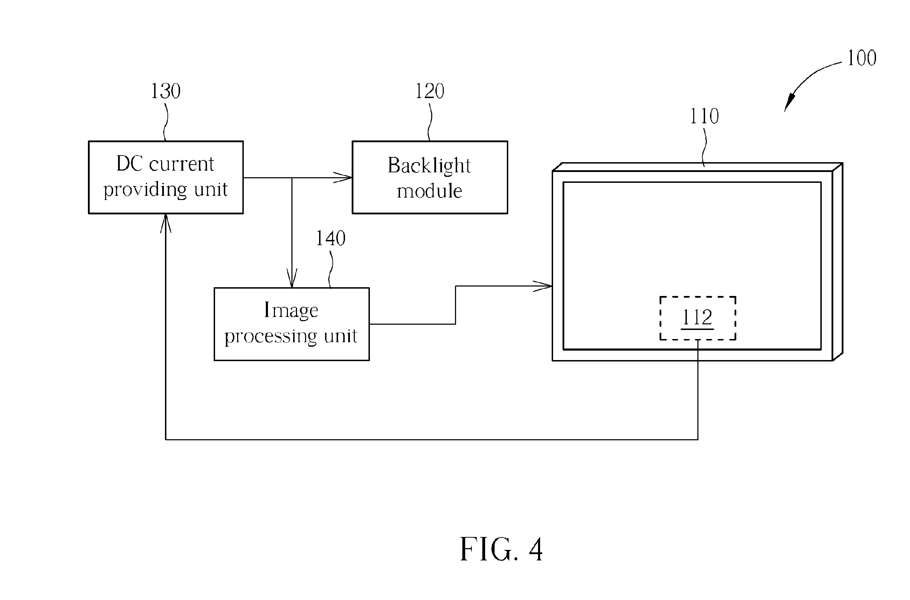

In order to keep the color temperature and the gamma curve of the display device consistent in the DC dimming method, the present invention provides a display device. Please refer to FIG. 4. FIG. 4 is a diagram showing a display device of the present invention. As shown in FIG. 4, the display device 100 of the present invention comprises a display panel 110, a backlight module 120, a DC current providing unit 130 and an image processing unit 140. The display panel 110 comprises a plurality of pixels for displaying images. The backlight module 120 is arranged at a rear side of the display panel 110, for emitting light to the display panel 110. The DC current providing unit 130 is electrically connected to the backlight module 120, for providing a DC current to the backlight module 120 in order to drive the backlight module 120 to emit light. The DC current providing unit 130 is further configured to adjust a level of the DC current according to a brightness control signal, in order to control a brightness level of the backlight module 120. For example, the brightness control signal can be generated according to a setting value according to an on screen display (OSD) interface 112. When a user inputs a brightness setting value via the OSD interface 112, the OSD interface 112 generates a corresponding brightness control signal for commanding the DC current providing unit to adjust the level of the DC current, so as to further control the brightness level of the backlight module 120 to a corresponding brightness level. The image processing unit 140 is for adjusting the color temperature and the gamma curve of the display device, in order to make the color temperature and the gamma curve of the display device substantially identical to color temperature and a gamma curve of the display device in a state of the brightness level of the backlight module being at a predetermined brightness level.

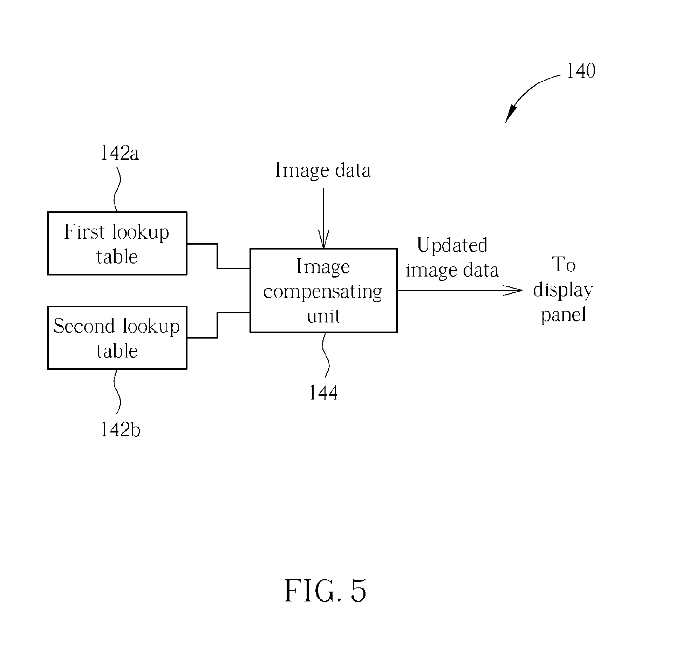

Please refer to FIG. 5, and refer to FIG. 4 as well. FIG. 5 is a functional block diagram of the image processing unit 140 of FIG. 4. As shown in FIG. 5, the image processing unit 140 comprises a plurality of lookup tables, and an image compensating unit 144. In the present embodiment, the image processing unit 140 comprises two lookup tables 142a and 142b. But quantity of the lookup tables in the image processing unit 140 is not limited by the above, the image processing unit 140 can comprise more lookup tables. The first lookup table 142a is for storing a first set of color gain adjusting values, and the second lookup table 142b is for storing a second set of color gain adjusting values. The first set of color gain adjusting values is generated according to a first set of color coordinates of an image displayed by the display device 100 in a state of the brightness level of the backlight module 120 being at a first brightness level and a set of predetermined color coordinates of the image displayed by the display device 100 in a state of the brightness level of the backlight module 120 being at the predetermined brightness level. For example, the present invention can pre-measure the first set of color coordinates of the image displayed by the display device 100 in the state of the brightness level of the backlight module 120 being at the first brightness level, thereafter, the present invention can generate a first set of color gain adjusting values according to difference between the first set of color coordinates and the set of predetermined color coordinates of the image displayed by the display device 100 in the state of the brightness level of the backlight module 120 being at the predetermined brightness level. The present invention can further pre-measure the second set of color coordinates of the image displayed by the display device 100 in the state of the brightness level of the backlight module 120 being at the second brightness level, thereafter, the present invention can generate the second set of color gain adjusting values according to difference between the second set of color coordinates and the set of predetermined color coordinates of the image displayed by the display device in the state of the brightness level of the backlight module being at the predetermined brightness level. The first set of color gain adjusting values and the second set of color gain adjusting values are then respectively stored in the first lookup table 142a and the second lookup table 142b.

When the DC current providing unit 130 adjusts the brightness level of the backlight module 120 to the first brightness level, the image compensating unit 144 can use the first set of color gain adjusting values in the first lookup table 142a to adjust and update display data, in order to adjust color gains of the pixels (such as red, blue and green pixels) of the display panel 110, so as to adjust the color temperature and the gamma curve of the display device 100. Since the first set of color gain adjusting values is generated according to the difference between the first set of color coordinates and the set of predetermined color coordinates, thus the color temperature and the gamma curve of the display device 100 in the state of the brightness level of the backlight module 120 being at the first brightness level can be substantially identical to the color temperature and the gamma curve of the display device in a state of the brightness level of the backlight module being at the predetermined brightness level.

Similarly, when the DC current providing unit 130 adjusts the brightness level of the backlight module 120 to the second brightness level, the image compensating unit 144 can use the second set of color gain adjusting values in the second lookup table 142b to adjust and update the display data, in order to adjust the color gains of the pixels (such as red, blue and green pixels) of the display panel 110, so as to adjust the color temperature and the gamma curve of the display device 100. Since the second set of color gain adjusting values is generated according to the difference between the second set of color coordinates and the set of predetermined color coordinates, thus the color temperature and the gamma curve of the display device 100 in the state of the brightness level of the backlight module 120 being at the second brightness level can be substantially identical to the color temperature and the gamma curve of the display device in the state of the brightness level of the backlight module being at the predetermined brightness level. Moreover, the color gain adjusting values in the lookup tables can be used to update the display data, for adjusting the color gains of the pixels (such as red, blue and green pixels) of the display panel 110, so as to separately adjust the color temperature, gamma curve or other related display information of the display devices 100.

In other words, when the brightness control signal is a first brightness control signal, and the first brightness control signal corresponds to the first brightness level, the image processing unit 140 performs gamma correction and color temperature correction to inputted image data, in order to let corrected image data correspond to a predetermined gamma curve and a predetermined color temperature level; and when the brightness control signal is switched from the first brightness control signal to a second brightness control signal, and the second brightness control signal corresponds to the second brightness level (the first brightness level is greater than the second brightness level), the image processing unit 140 performs the gamma correction and color temperature correction to the inputted image data, in order to let corrected image data correspond to the predetermined gamma curve, wherein the first set of color gain adjusting values and the second set of color gain adjusting values are generated according to the first brightness control signal and the second brightness control signal respectively.

According to the above arrangement, the present invention can generate corresponding color gain adjusting values according to different brightness levels, so as to keep the color temperature and the gamma curve of the display device consistent when the backlight module 120 is at different brightness levels. Moreover, among different sets of color gain adjusting values, the image compensating unit 144 can further use the interpolation method or other algorithms to obtain other set of color gain adjusting values corresponding to other brightness levels.

In addition, the predetermined brightness level can be determined according to design requirement. For example, if a range of the setting value of the OSD interface 112 is from 0 to 100, the present invention can set the predetermined brightness level to be a brightness level corresponding to a setting value of 50, and color temperature and a gamma curve corresponding to the predetermined brightness level can be used as reference standard for other brightness levels.

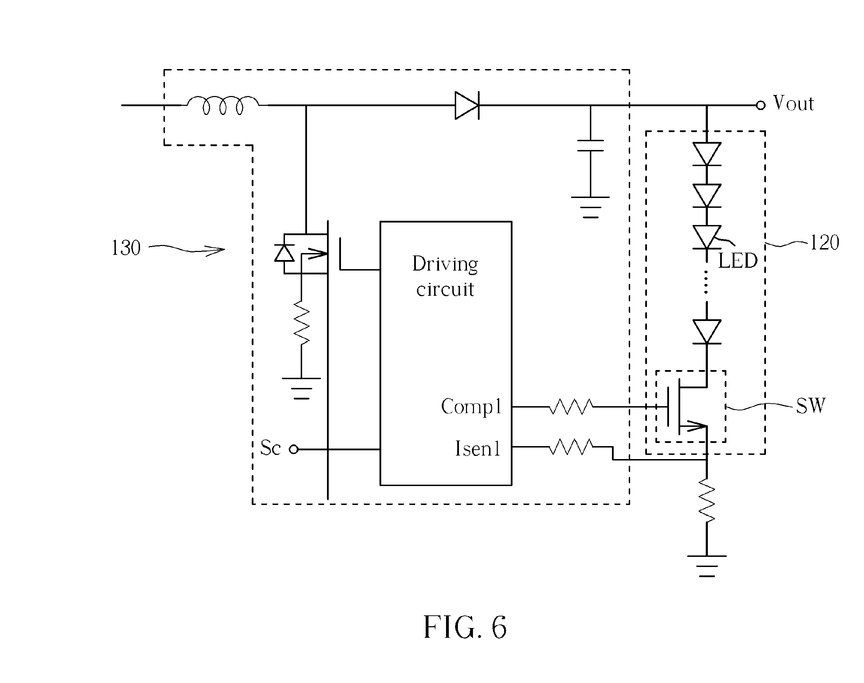

Please refer to FIG. 6. FIG. 6 is a diagram showing an embodiment of the back light module and the DC current providing unit of the present invention. As shown in FIG. 6, a control end Comp1 of a driving circuit of the DC current providing unit 130 controls a voltage level of a gate end of a power switch SW according to a control signal Sc, in order to adjust a current flowing through light emitting diodes LED of the backlight module 120. A sensing end Isen1 of the driving circuit is configured to sense the current flowing through the light emitting diodes LED of the backlight module 120, such that the driving circuit can preciously control the current flowing through the light emitting diodes LED of the backlight module 120. In addition, the driving circuit can also control an output voltage Vout, for providing the DC current to the back light module 120.

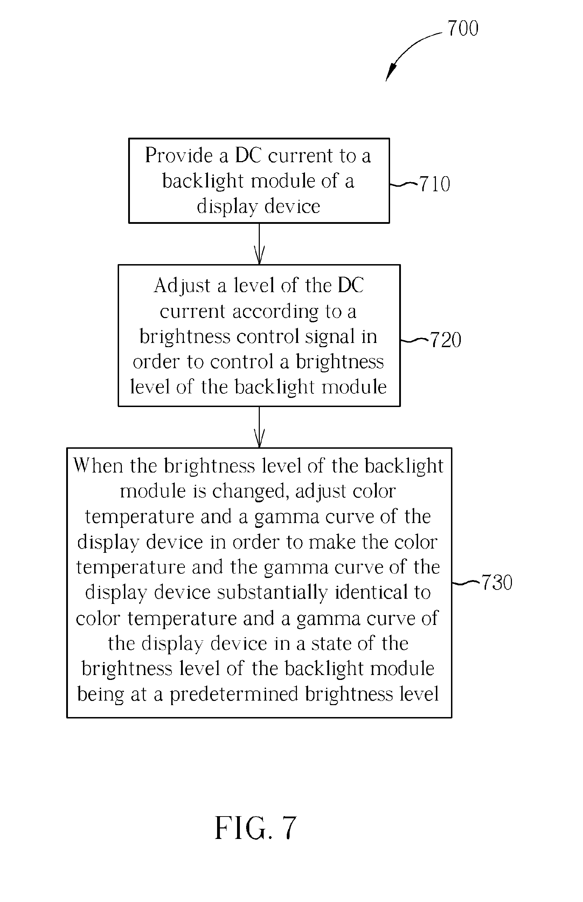

Please refer to FIG. 7. FIG. 7 is a flowchart 700 showing the image processing method of the display device of the present invention. The flowchart of the image processing method of the display device of the present invention comprises the following steps:
- Step 710:: Provide a DC current to a backlight module of a display device;
- Step 720:: Adjust a level of the DC current according to a brightness control signal in order to control a brightness level of the backlight module; and
- Step 730:: When the brightness level of the backlight module is changed, adjust color temperature and a gamma curve of the display device in order to make the color temperature and the gamma curve of the display device substantially identical to color temperature and a gamma curve of the display device in a state of the brightness level of the backlight module being at a predetermined brightness level.

In contrast to the prior art, the image processing method of the display device of the present invention can compensate display data when using the DC dimming method to adjust the brightness level of the backlight module, in order to adjust the color temperature and the gamma curve of the display device, so as to further keep the color temperature and the gamma curve of the display device consistent. Therefore, the image quality of the display device of the present invention is not affected when using the DC dimming method.

## Claims

1. An image processing method of a display device (100), comprising:
providing a DC current to a backlight module (120) of the display device (100);
adjusting a level of the DC current according to a brightness control signal in order to control a brightness level of the backlight module (120); and
**characterized by**:
when the brightness level of the backlight module (120) is changed, adjusting color temperature and a gamma curve of the display device (100) in order to make the color temperature and the gamma curve of the display device (100) substantially identical to color temperature and a gamma curve of the display device (100) in a state of the brightness level of the backlight module (120) being at a predetermined brightness level.

2. The image processing method of claim 1, **characterized in that** adjusting the color temperature and the gamma curve of the display device (100) comprises:
using a first lookup table (142a) to adjust the color temperature and the gamma curve of the display device (100) in a state of the brightness level of the backlight module (120) being at a first brightness level; and
using a second lookup table (142b) to adjust the color temperature and the gamma curve of the display device (100) in a state of the brightness level of the backlight module (120) being at a second brightness level.

3. The image processing method of claim 1, **characterized in that** adjusting the color temperature and the gamma curve of the display device (100) comprises:
adjusting a color gain of the display device (100) in a state of the brightness level of the backlight module (120) being at a first brightness level; and
adjusting the color gain of the display device (100) in a state of the brightness level of the backlight module (120) being at a second brightness level.

4. The image processing method of claim 1 further **characterized by**:
pre-measuring a first set of color coordinates of an image displayed by the display device (100) in a state of the brightness level of the backlight module (120) being at a first brightness level;
generating a first set of color gain adjusting values according to the first set of color coordinates and a set of predetermined color coordinates of the image displayed by the display device (100) in a state of the brightness level of the backlight module (120) being at the predetermined brightness level;
pre-measuring a second set of color coordinates of the image displayed by the display device (100) in a state of the brightness level of the backlight module (120) being at a second brightness level;
generating a second set of color gain adjusting values according to the second set of color coordinates and the set of predetermined color coordinates of the image displayed by the display device (100) in the state of the brightness level of the backlight module (120) being at the predetermined brightness level; and
respectively storing the first set of color gain adjusting values and the second set of color gain adjusting values in a first lookup table (142a) and a second lookup table (142b);
wherein adjusting the color temperature and the gamma curve of the display device (100) comprises:
using the first lookup table (142a) to adjust the color temperature and the gamma curve of the display device (100) in the state of the brightness level of the backlight module (120) being at the first brightness level; and
using the second lookup table (142b) to adjust the color temperature and the gamma curve of the display device (100) in the state of the brightness level of the backlight module (120) being at the second brightness level.

5. The image processing method of claim 1, 2, 3 or 4, **characterized in that** the brightness control signal is generated according to a setting value of an on screen display (OSD) interface (112).

6. A display device (100), comprising:
a backlight module (120);
a DC current providing unit (130), for providing a DC current to the backlight module (120), and adjusting a level of the DC current according to a brightness control signal in order to control a brightness level of the backlight module (120); and
**characterized by**:
an image processing unit (140), for adjusting color temperature and a gamma curve of the display device (100) when the brightness level of the backlight module (120) is changed, in order to make the color temperature and the gamma curve of the display device (100) substantially identical to color temperature and a gamma curve of the display device (100) in a state of the brightness level of the backlight module (120) being at a predetermined brightness level.

7. The display device of claim 6, **characterized in that** the image processing unit (140) is further configured to use a first lookup table (142a) to adjust the color temperature and the gamma curve of the display device (100) in a state of the brightness level of the backlight module (120) being at a first brightness level, and use a second lookup table (142b) to adjust the color temperature and the gamma curve of the display device (100) in a state of the brightness level of the backlight module (120) being at a second brightness level.

8. The display device of claim 6, **characterized in that** the image processing unit (140) adjusting the color temperature and the gamma curve of the display device (100), is the image processing unit (140) adjusting a color gain of the display device (100) in a state of the brightness level of the backlight module (120) being at a first brightness level, and adjusting the color gain of the display device (100) in a state of the brightness level of the backlight module (120) being at a second brightness level.

9. The display device of claim 6, **characterized in that** the image processing unit (140) comprises:
a first lookup table (142a), for storing a first set of color gain adjusting values, the first set of color gain adjusting values being generated according to a first set of color coordinates of an image displayed by the display device (100) in a state of the brightness level of the backlight module (120) being at a first brightness level and a set of predetermined color coordinates of the image displayed by the display device (100) in a state of the brightness level of the backlight module (120) being at the predetermined brightness level;
a second lookup table (142b), for storing a second set of color gain adjusting values, the second set of color gain adjusting values being generated according to a second set of color coordinates of an image displayed by the display device (100) in a state of the brightness level of the backlight module (120) being at a second brightness level and a set of predetermined color coordinates of the image displayed by the display device (100) in the state of the brightness level of the backlight module (120) being at the predetermined brightness level; and
an image compensating unit (144), for using the first lookup table (142a) to adjust the color temperature and the gamma curve of the display device (100) in the state of the brightness level of the backlight module (120) being at the first brightness level, and using the second lookup table (142b) to adjust the color temperature and the gamma curve of the display device (100) in the state of the brightness level of the backlight module (120) being at the second brightness level.

10. The display device of claim 6, 7, 8 or 9 further **characterized by** an on screen display (OSD) interface (112), wherein the brightness control signal is generated according to a setting value of the on screen display interface (112).

11. A display device (100), comprising:
a backlight module (120);
a DC current providing unit (130), for providing a DC current to the backlight module (120), and adjusting a level of the DC current according to a brightness control signal in order to control a brightness level of the backlight module (120); and
**characterized by**:
an image processing unit (140), coupled to the DC current providing unit (130), for performing gamma correction to inputted image data when the brightness control signal is a first brightness control signal, in order to let corrected image data correspond to a predetermined gamma curve;
wherein when the brightness control signal is switched from the first brightness control signal to a second brightness control signal, the image processing unit (140) is further configured to perform gamma correction to the inputted image data, in order to let corrected image data correspond to the predetermined gamma curve.

12. The display device of claim 11, **characterized in that** the image processing unit (140) is further configured to perform color temperature correction to the inputted image data when the brightness control signal is the first brightness control signal, in order to let corrected image data correspond to a predetermined color temperature level; and
wherein when the brightness control signal is switched from the first brightness control signal to a second brightness control signal, the image processing unit (140) is further configured to perform color temperature correction to the inputted image data, in order to let corrected image data correspond to the predetermined color temperature level.

13. The display device of claim 11, **characterized in that** the image processing unit (140) comprises:
a first lookup table (142a), for storing a first set of color gain adjusting values, the first set of color gain adjusting values being generated according to the first brightness control signal;
a second lookup table (142b), for storing a second set of color gain adjusting values, the second set of color gain adjusting values being generated according to the second brightness control signal; and
an image compensating unit (144), for using the first lookup table (142a) to adjust the inputted image data, and using the second lookup table (142b) to adjust the inputted image data.

14. The display device of claim 11, 12 or 13, **characterized in that** the first brightness control signal and the second brightness control signal respectively correspond to a first brightness level and a second brightness level of the backlight module (120), and the first brightness level is greater than the second brightness level.
